# EUROPÄISCHE PATENTSCHRIFT

(11) **EP 0 894 428 B1**
(45) Veröffentlichungstag und Bekanntmachung des Hinweises auf die Patenterteilung: **17.07.2002**
(21) Anmeldenummer: 98106621.0
(22) Anmeldetag: 09.04.1998
(51) Int. Cl.: A01F 15/07

(54) **Rundballenpresse**
Rotobaler
Presse à balles rondes

(30) Priorität: 29.07.1997 DE 29713514 U
(43) Veröffentlichungstag der Anmeldung: 03.02.1999
(73) Patentinhaber: Kverneland Geldrop B.V., 5660 AA Geldrop (NL)
(72) Erfinder: Van den Wildenberg, Leonardus Johannes, 6021 CT Budel (NL)
(74) Vertreter: Grünecker, Kinkeldey, Stockmair & Schwanhäusser Anwaltssozietät

(56) Entgegenhaltungen:
- EP-A- 0 228 944
- DE-A- 3 941 707
- FR-A- 2 558 029

## Beschreibung

Die Erfindung betrifft eine Rundballenpresse der im Oberbegriff des Anspruchs 1 angegeben Art.

Bei einer aus DE-U-29 70 6544 bekannten Rundballenpresse ist der dritte Wandabschnitt in der Auswurfklappe schwenkbar gelagert, so daß er bei der zum Auswerfen des fertigen Rundballens gesteuerten Öffnungsbewegung der Auswurfklappe mit dieser angehoben wird und dem Rundballen den Weg nach außen freigibt. Das Umlenkelement, das die zweiten und dritten Wandabschnitte relativ zueinander abstützt, und zwar unter der Spannung der Preßbahn bzw. der Preßriemen, ist mit unveränderbarem Abstand zum freien Ende des dritten Wandabschnittes an dessen Rahmenteil angebracht.

Bei einer aus DE-A-39 41 707 bekannten Rundballenpresse ist der dritte Wandabschnitt zur Gänze in der Auswurfklappe gelagert, so daß er sich beim Öffnen der Klappe als Gesamtheit von den anderen Wandabschnitten wegbewegt. Auch bei einer aus EP-A-0 228 944 bekannten Rundballenpresse ist der dritte Wandabschnitt zur Gänze in der Auswurfklappe gelagert und zusätzlich als Rollengang ausgebildet, der für die Auswurfklappe ein hohes zusätzliches Gewicht erzeugt, und die Umlenkvorrichtung für Preßriemen trägt. Auch bei einer aus FR-A-25 58 029 bekannten Rundballenpresse ist der dritte Wandabschnitt in der Auswurfklappe gelagert, was zu einer schweren Auswurfklappe und einer komplizierten Antriebsstruktur für den dritten Wandabschnitt führt.

Der Erfindung liegt die Aufgabe zugrunde, eine Rundballenpresse der eingangs genannten Art zu schaffen, die baulich einfach ist und sich kostengünstig herstellen läßt, und bei der eine für den Wickelbeginn auch kritischen Emteguts günstige Startkammerform und ein zügiger Auswurf des Rundballens erreichbar sind.

Die gestellte Aufgabe wird mit den Merkmalen des Anspruchs 1 gelöst.

Da der dritte Wandabschnitt im Gehäuse gelagert ist, wird die Gewichtsbelastung für die Auswurfklappe reduziert und läßt sich der Antrieb für den dritten Wandabschnitt, der beim Wickeln eines Rundballens in Wickelrichtung bewegt werden muß, baulich einfach und platzsparend gestalten. Zweckmäßig lassen sich in diesem Bereich des Gehäuses nahe der Startkammer ohnedies vorgesehene, angetriebene Komponenten nutzen, um die Antriebsbewegung für den dritten Wandabschnitt abzuleiten. Da das ggfs. die zweiten und dritten Wandabschnitte relativ zueinander abstützende Umlenkelement vom dritten Wandabschnitt getrennt an der Auswurfklappe gelagert ist, läßt sich der dritte Wandabschnitt so ausbilden, daß er in der Startstellung relativ weit in die Preßkammer greift und sich der Form des im Entstehen begriffenen Ballenkems weitestgehend anschmiegt. Die zum Auswerfen des fertigen Rundballens benötigte Öffnung wird beim Öffnen der Auswurfklappe zwischen dem dritten Wandabschnitt und dem sich mit der Auswurfklappe bewegenden Umlenkelement gebildet, was den Vorteil hat, daß der dritte, angetriebene Wandabschnitt und auch die Preßbahn bzw. die Preßriemen auf dem Umlenkelement dem auszuwerfenden Rundballen Auswerfimpulse erteilen, um den Auswurfvorgang zu beschleunigen bzw. zu verhindem, daß der Rundballen hängen bleibt. Zuvor werden unter der Ballendruckkraft des wachsenden Rundballens die zweiten und dritten Wandabschnitte allmählich verdrängt, wobei sie den für die Ballendichte notwendigen Widerstand leisten.Das Umlenkelement wird zusammen mit dem dritten Wandabschnitt bis in dessen der Maximalgröße der Preßkammer entsprechende Stellung verlagert, wobei es stets mit gleichbleibend geringem Abstand beim freien Ende des dritten Wandabschnittes bleibt. Erst durch das Öffnen der Auswurfklappe trennt sich das Umlenkelement vom dritten Wandabschnitt, um die Auswurföffnung zu bilden. Dabei ist es möglich, daß nur das Umlenkelement die Auswurföffnung freigibt, oder daß das Umlenkelement und der dritte Wandabschnitt gemeinsam und schneller die Auswurföffnung durch gegensinnige Bewegungen bilden.

Gemäß Anspruch 2 ist der dritte Wandabschnitt während des Preßvorganges vom das Umlenkelement tragenden Stützteil abgestützt, wobei das Umlenkelement von der gespannten Preßbahn bzw. dem Preßriemen gestützt wird. Während des Preßvorganges bewegt sich abhängig von der Lage der Schwenkachse des Stützteils in der Auswurfklappe das Umlenkelement mit gleichbleibend geringem Abstand neben dem freien Ende des dritten Wandabschnitts, so daß hier kein Emtegut hängen bleibt. Die zweiten und dritten Wandabschnitte werden beim Preßvorgang durch das Umlenkelement relativ zueinander abgestützt. Der von der Preßbahn bzw. den Preßriemen erzeugte Gegendruck am Umlenkelement wird über den Stützteil auf den dritten Wandabschnitt übertragen. Nach dem Auswerfen des Rundballens wird beim Schließen der Auswurfklappe der Stützteil unter den noch in seiner unteren Stellung liegenden dritten Wandabschnitt geschoben, wobei der Stützteil den dritten Wandabschnitt in die Startstellung zurückstellt, so daß unverzüglich mit dem Wickeln eines neuen Rundballens begonnen werden kann, wenn die Auswurfklappe geschlossen ist. Es wäre alternativ denkbar, den dritten Wandabschnitt mittels eines anderen Hilfsmechanismus zurückzustellen.

Gemäß Anspruch 3 trennt sich der Stützteil zum Freigeben einer großen Auswurföffnung für den fertigen Rundballen vollständig vom dritten Wandabschnitt, sobald die Auswurfklappe geöffnet wird.

Gemäß Anspruch 4 wird die zur Ballenformung und zum Rückstellen des dritten Wandabschnittes in seine Startstellung benötigte Kraft bzw. Bewegung vom Stützteil aufgebracht, und zwar abhängig von der Schließbewegung der Auswurfklappe einerseits und der Spannung der Preßbahn bzw. Preßriemen andererseits.

Gemäß Anspruch 5 sind zum Rückstellen des dritten Wandabschnitts in seine Startstellung keine zusätzlichen Hilfsmittel oder Federeinrichtungen erforderlich. Allerdings könnten solche Hilfseinrichtungen für den Wandabschnitt und/oder das Umlenkelement vorgesehen sein, falls keine unmittelbare Kopplung zwischen diesen beiden Komponenten erwünscht ist.

Gemäß Anspruch 6 ergibt sich eine verschleißarme und betriebssichere Kooperation zwischen dem Stützteil und dem dritten Wandabschnitt, unterstützt durch die baulichen Merkmale gemäß Anspruch 8.

Gemäß Anspruch7 wird durch die Geometrie, mit der die Preßbahn bzw. Preßriemen an den Umlenkrollen umgelenkt wird bzw. werden, gegebenenfalls ohne zusätzliche mechanische Hilfsmittel, die bei der Ballenformung erforderliche Widerstandskraft der zweiten und dritten Wandabschnitte erzeugt. Femer ist durch diese Relativpositionen zwischen den Umlenkrollen sichergestellt, daß die Preßbahn bzw. Preßriemen auch in der Startstellung eine Kraft auf den dritten Wandabschnitt ausüben. Der Wandabschnitt kann somit zu keiner Zeit unkontrollierte Bewegungen ausführen oder in Zwischenstellungen hängenbleiben.

Gemäß Anspruch 9 wird mit der Form des Stützteils bzw. des diesen definierenden Armes erzielt, daß der Stützteil an der der Preßkammer abgewandten Seite um den dritten Wandabschnitt herumzugreifen vermag, und seine Kraft mit bezüglich der Schwenkachse des dritten Wandabschnitts günstiger Richtung auf diesen überträgt.

Günstige kinematische Verhältnisse für die Schwenkbewegungen der einzelnen Komponenten sind gemäß Anspruch 10 gegeben. Femer läßt sich eine optimale Form der Startkammer erzielen, weil der dritte Wandabschnitt in der Startstellung im wesentlichen die Kontur der Starterwalze fortsetzt, ohne einen das Verhängen von Emtegut begünstigenden Zwickel freizulassen. Der untere Endbereich des dritten Wandabschnittes führt bei der Anlenkung des Rahmenteils in etwa koaxial zur Achse der Starterwalze eine Absenkbewegung aus, wenn der dritte Wandabschnitt nach außen und unten verlagert wird, bis der Rundballen seine maximale Größe erreicht. Auch dann liegen die Starterwalze und der dritte Wandabschnitt optimal und nahe beieinander am Außenumfang des Rundballens an. Liegt die Schwenkachse des dritten Wandabschnittes in der Drehachse der Starterwalze, dann läßt sich eine baulich einfache Antriebsverbindung zum dritten Wandabschnitt herstellen, zweckmäßigerweise unter Abgreifen der Drehbewegung der Starterwalze.

Gemäß Anspruch 11 wird der dritte Wandabschnitt durch einen Rollgang gebildet, der sich an die Kontur des fertigen Rundballens günstig anzuschmiegen vermag und eine optimale Startkammerform erzielen läßt.

Gemäß Anspruch 12 ist alternativ der dritte Wandabschnitt nach Art eines Förderbandes mit einer eigenen Preßbahn oder Preßriemen ausgebildet.

Gemäß Anspruch 13 ergibt sich ein besonders einfacher Antrieb des dritten Wandabschnittes, insbesondere bei Vorsehen eines Rollgangs mit mehreren Preßwalzen. So ist es beispielsweise möglich, mit drei Preßwalzen eine optimale Startkammerform zu erzielen und alle drei Preßwalzen über eine Antriebsverbindung anzutreiben die die Drehbewegung der Starterwalze abgreift. Alternativ läßt sich ein eigener Antrieb für den dritten Wandabschnitt vorsehen, z.B. wenn keine Starterwalze vorgesehen ist, sondern ein Teil der Aufnahmevorrichtung der Rundballenpresse bis in die Startkammer reicht, um den Startvorgang zu unterstützen.

Gemäß Anspruch 14 wird der dritte Wandabschnitt beim Öffnen der Auswurfklappe bewußt nach unten verschwenkt, um das Auswerfen oder selbsttätige Abrollen des Rundballens zu begünstigen. Dies ist zweckmäßig, weil der Rundballen zügig ausgeworfen wird bzw. selbsttätig abzurollen beginnt, und sich eine weite Auswurföffnung einstellen läßt.

Anhand der Zeichnung wird eine Ausführungsform des Erfindungsgegenstandes erläutert. Es zeigen:
- Fig. 1: eine schematische Längsschnittansicht einer Rundballenpresse, wobei gleichzeitig zwei Betriebsphasen angedeutet sind, und
- Fig. 2: einen Längsschnitt bei geöffneter Auswurfklappe.

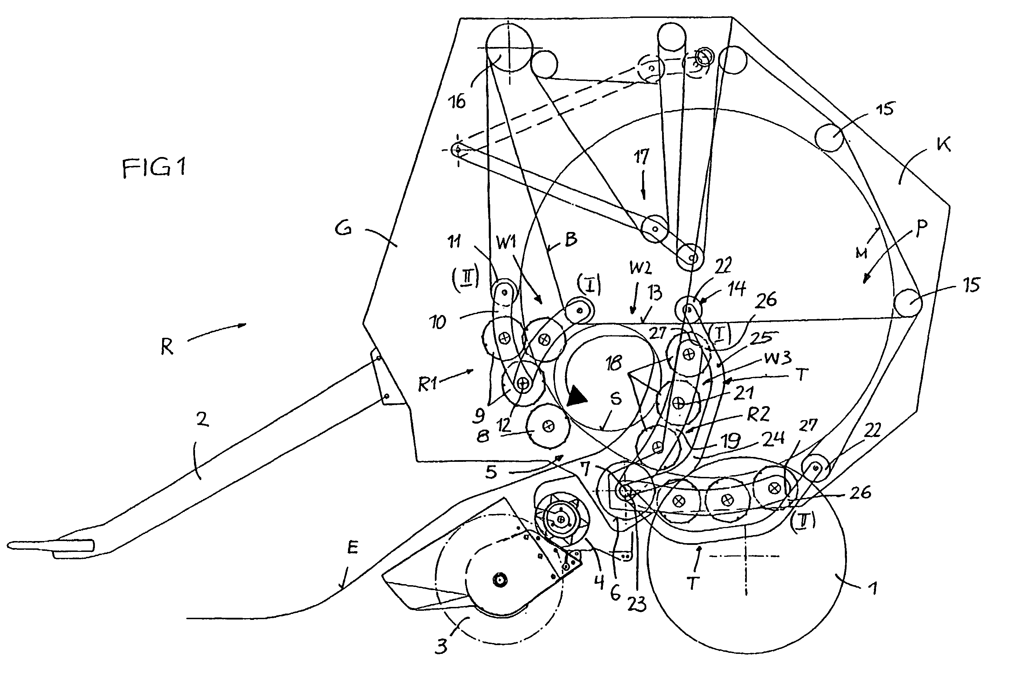

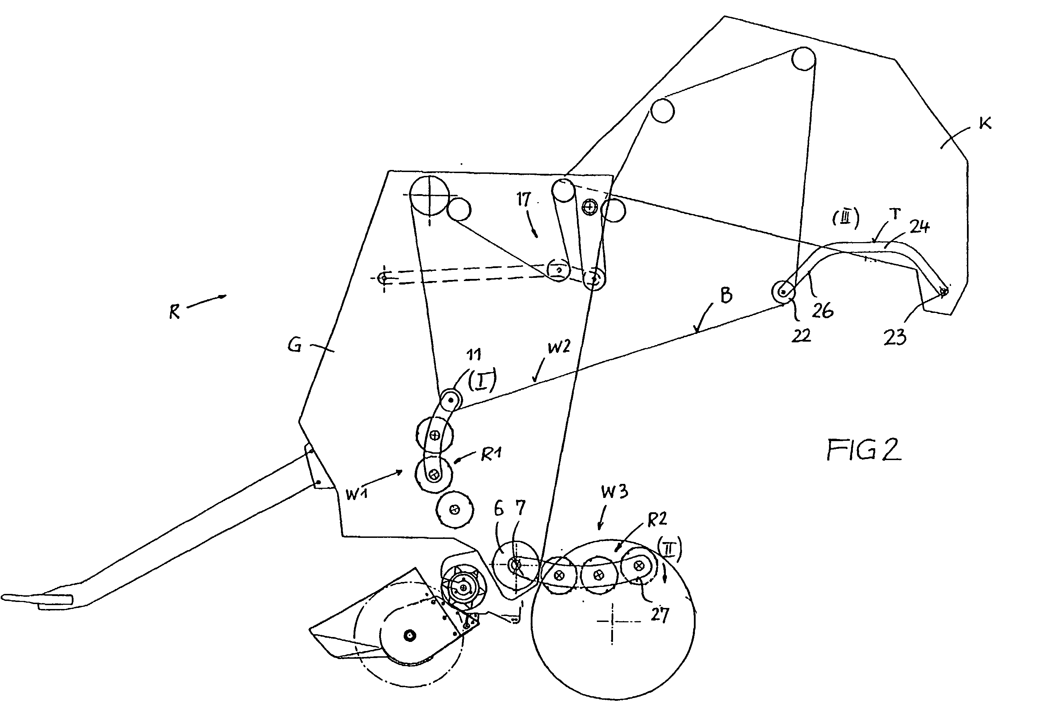

Eine Rundballenpresse R mit variabler Preßkammer P weist in Fig. 1 ein auf Rädern 1 fahrbares Gehäuse G mit einer Zugdeichsel 2 auf, unterhalb derer das Emtegut E von einer Aufnahmevorrichtung 3, gegebenenfalls über ein dieser nachgeordnetes Schneidwerk oder Förderelement 4, durch eine Zuführöffnung 5 in die Preßkammer P einführbar ist. Am Gehäuse G ist beispielsweise oben schwenkbar eine rückseitige Auswurfklappe K angeordnet (geschlossene Stellung: Fig. 1, Auswurfstellung: Fig. 2). Die Preßkammer P ist in ihrem Volumen zwischen einer durch einen Vollkreis angedeuteten Startkammergröße S und einer durch einen größeren ausgezogenen Kreis angedeuteten Maximalgröße M verstellbar. Die Wickelrichtung in der Preßkammer P verläuft (s. Pfeil) entgegen dem Uhrzeigersinn.

Die Preßkammer P wird unabhängig von ihrer momentanen Größe begrenzt durch in Wickelrichtung angetriebene erste, zweite und dritte Wandabschnitte W1, W2, W3. In Wickelrichtung folgt auf die Zuführöffnung 5 eine Starterwalze 6, die um eine Querachse 7 zur Drehung antreibbar ist. Auf die Starterwalze 6 folgt der dritte Wandabschnitt W3, an den sich der zweite Wandabschnitt W2 anschließt, auf den in Wickelrichtung der erste Wandabschnitt W1 folgt. Zwischen dem ersten Wandabschnitt W1 und der Zuführöffnung 5 ist eine stationäre drehbare Walze 8 angeordnet. Es ergibt sich eine zum Starten eines Wickelvorgangs optimale Form der Startkammer bei Startkammergröße der Preßkammer P, da sich die Wandabschnitte W1, W2 und W3 weitgehend an eine runde Form des Ballenkems anschmiegen.

Der erste Wandabschnitt W1 ist bei der gezeigten Ausführungsform ein Rollgang R1 mit, z.B. zwei, zur Drehung angetriebenen Walzen 9 in einem Rahmen 10, der um die Achse der untersten Walze 9 verschwenkbar gelagert ist und an seinem freien Ende ein Umlenkelement 11 in Form einer Umlenkwalze trägt. Der erste Wandabschnitt W1 ist verstellbar zwischen einer Startstellung I und einer Maximalstellung II. Anstelle eines Rollgangs R1 könnte auch ein Förderband mit einer eigenen Preßbahn oder mit eigenen Preßriemen vorgesehen sein.

Der zweite Wandabschnitt W2 wird von einer Sektion 13 einer Preßbahn oder mehrerer Preßriemen B gebildet, die endlos im Gehäuse G und auch in der Auswurfklappe K an Umlenkwalzen 15 abgestützt und beispielsweise durch eine Walze 16 angetrieben wird bzw. werden. Die erforderliche Spannung wird durch eine angedeutete Spannvorrichtung 17 erzeugt. Die Sektion 13 stützt sich einerseits an der Umlenkwalze 11 des ersten Wandabschnittes W1 und andererseits an einem Umlenkelement 14 (einer Umlenkwalze 22) ab, das dem dritten Wandabschnitt W3 zugeordnet ist, um z.B. über den Zug der Preßbahn bzw. der Preßriemen B den beim Ballenformen erforderlichen Bewegungswiderstand für den Wandabschnitt W3 zu erzeugen bzw. um bei der gezeigten Ausführung den dritten Wandabschnitt W3 aus seiner Maximalstellung II in die Startstellung I zurück zu verstellen.

Der dritte Wandabschnitt W3 ist bei dieser Ausführungsform als Rollgang R2 dargestellt, der, z.B. drei, in Wickelrichtung angetriebene Walzen 18 in einem Rahmenteil 19 aufweist. Der Rahmenteil 19 ist zumindest annähernd koaxial zur Drehachse 7 der Starterwalze 6 schwenkbar im Gehäuse G gelagert. Eine (nicht dargestellte) Antriebsverbindung kann zwischen der Starterwalze 6 und den Walzen 18 des Rollgangs R2 vorgesehen sein, wie dies durch die gekreuzten Achsen 21 der Walzen 18 angedeutet ist. Es wäre denkbar, im Rollengang R2 beispielsweise nur eine Walze 18 vorzusehen, oder mehr als drei. Ferner könnte anstelle des Rollgangs R2 ein Förderband im Rahmenteil 19 vorgesehen sein, das eine eigene Preßbahn oder eigene Preßriemen auf Walzen aufweist.

Das dem dritten Wandabschnitt W3 zugeordnete Umlenkelement 14 (Umlenkwalze 22) ist an einem Stützteil T angeordnet, der um eine Achse 23 in der Auswurfklappe K schwenkbar gelagert ist. Der Stützteil T ist zusammen mit dem dritten Wandabschnitt W3 zwischen der Maximalstellung II und der Startstellung I verschwenkbar, und zwar unter der Zugspannungskraft der Preßbahn bzw. der Preßriemen B. Das Umlenkelement 4 könnte auch auf andere Weise in der Auwurfklappe K beweglich gelagert sein, z.B. in Schlitzführungen oder dgl. Wichtig ist, daß sich das Umlenkelement 14 während des Preßvorgangs in etwa gleichlaufend mit und nahe dem freien Ende des dritten Wandabschnitts W3 um dessen Lagerachse 7 bewegen kann, und sich erst beim Öffnen der Auswurfklappe vom dritten Wandabschnitt W3 trennt.

Der Stützteil T (er könnte durch einen Rahmen oder zumindest durch zwei Arme 24 gebildet sein) hat eine Länge und Form, dank derer er den gesamten dritten Wandabschnitt W3 übergreifen kann. Der Arm 24 ist U-förmig gebogen oder gekröpft, so daß ein Zwischenabschnitt 25 des Armes 24 an der der Preßkammer P bzw. der Startkammer S abgewandten Seite des dritten Wandabschnittes W3 um diesen herumgreift. Zwischen dem Rahmenteil 19 und dem Stützteil T sind Anschlagmittel 26, 27 vorgesehen, die eine Mitnehmerfunktion nach Art einer in einer Richtung wirkenden Kupplung erbringen, um den von der Preßbahn bzw. den Preßriemen B auf das Umlenkelement 14 ausgeübten Zug auf den dritten Wandabschnitt W3 zu übertragen. Beispielsweise sind die Anschlagmittel 26, 27 einander quer zur Schwenkrichtung des Stützteils T und des Rahmenteils 19 hintergreifende Anschläge, wobei zweckmäßigerweise einer dieser Anschläge als schräge Rampe ausgebildet sein sollte, um lokalen Verschleiß zu minimieren. Es wäre möglich, daß der Stützteil T an der verlängerten Achse der letzten Walze 18 des dritten Wandabschnitts angreift, und nicht am Rahmenteil 19.

In der Auswurfklappe K sind weitere, als Preßwalzen fungierende Umlenkwalzen 15 für die Preßbahn bzw. die Preßriemen B vorgesehen, wobei zweckmäßigerweise die unterste Umlenkwalze 15 in der Auswurfklappe K in einer Höhenposition angeordnet ist, in der sie höher liegt als das Umlenkelement 14 am Stützteil T in dessen Startstellung I bzw. auch die Umlenkwalze 11 in der Startstellung I. Auf diese Weise wird für die Verstellung des dritten Wandabschnittes W3 in die Startstellung I bzw. beim Verdrängen des dritten Wandabschnittes W3 unter der Ballendruckkraft aus dem Zug in der Preßbahn bzw. den Preßriemen B der nötige Widerstand für den dritten Wandabschnitt W3 erzeugt. Es ist allerdings denkbar, zusätzlich oder alternativ am Stützteil T und/oder am dritten Wandabschnitt W3 Federn angreifen zu lassen.

Fig. 2 verdeutlicht die relativen Positionen der einzelnen Komponenten der Rundballenpresse R nach dem Auswerfen eines Rundballens. Die Auswurfklappe K ist in ihrer geöffneten Position. Der erste Wandabschnitt W1 ist unter dem Zug der Preßbahn bzw. der Preßriemen B in der Startstellung I. Der dritte Wandabschnitt W3 ist, da er vollständig vom Stützteil T getrennt ist, in seiner Maximalstellung II, in der er zuvor beim Auswerfen des Rundballens auf diesen einen Auswurfimpuls ausgeübt hat. Der zweite Wandabschnitt W2 ist zwischen den Umlenkwalzen 11 und 22 gestreckt. Die Spannvorrichtung 17 ist zum Freigeben der erforderlichen Länge der Preßbahn bzw. der Preßriemen B verstellt. Der Stützteil T ist unter dem Zug der Preßbahn bzw. der Preßriemen B in eine Auswurfstellung III verstellt, in der er in etwa horizontal steht und eine möglichst weite Auswurföffnung freigibt.

Wird die Auswurfklappe K geschlossen, dann gleitet der Stützteil T mit seiner Schwenkachse 23 unter den untenliegenden, dritten Wandabschnitt W3, wobei die Anschläge und Gegenanschläge 26, 27 formschlüssig aneinander zum Angriff gelangen, und der nach wie vor wirkende Zug in der Preßbahn bzw. den Preßriemen B den Stützteil T in die Startstellung I verschwenkt. Dadurch wird der dritte Wandabschnitt W3 aus seiner untenliegenden Maximalstellung II zügig bis in die Startstellung I (Fig. 1) hochgestellt. Da sich dabei auch der zweite Wandabschnitt W32in etwa horizontal orientiert, ist die Startkammer in der gewünschten Form wiederhergestellt, sobald die Auswurfklappe K vollständig geschlossen ist.

Beim Beginn eines neuen Wickelvorgangs wird die Startkammer S durch die ersten, zweiten und dritten Wandabschnitte W1, W2, W3 in der gewünschten Form begrenzt. Das Emtegut E wird in Wickelrichtung in einem Ballenkem geformt. Mit wachsendem Ballenkem werden die ersten, zweiten und dritten Wandabschnitte W3 allmählich verdrängt, bis der erste Wandabschnitt W1 und auch der dritte Wandabschnitte W3 ihre Maximalstellungen II erreicht haben. Der zweite Wandabschnitt W2 erstreckt sich dann über den verbleibenden Umfang des Rundballens. Der Stützteil T ist in seine Maximalstellung II nach unten geschwenkt, in der er unter dem dritten Wandabschnitt W3 liegt und diesen ggfs. stützt, so daß die Umlenkwalze 22 in etwa die Kontur des dritten Wandabschnittes W3 verlängert.

Nachdem der fertig gewickelte Rundballen, wie üblich, in Bindematerial eingebunden worden ist, wird die Auswurfklappe K geöffnet. Der Stützteil T gleitet vom Rahmenteil 19 ab, d.h. die Anschlagmittel 26 und 27 lösen sich voneinander. Dabei wird zweckmäßig der dritte Wandabschnitt beim Herausziehen des Stützteiles T mit der sich öffnenden Auswurfklappe gegebenenfalls noch bis über die gezeigte Maximalstellung II nach unten (d.h. im Uhrzeigersinn s. Pfeil) weiter verschwenkt als gezeigt, um das Auswerfen des fertigen Rundballens zu begünstigen und gegebenenfalls sogar eine Ablauframpe nach hinten unten zu bilden. Beim weiteren Öffnen der Auswurfklappe wird der Stützteil T bis in seine in Fig. 2 gezeigte Auswurfstellung III oder sogar noch höher um seine Schwenkachse 23 im Uhrzeigersinn geschwenkt, damit der Rundballen leicht ausgeworfen werden kann. Anschließend wird die Auswurfklappe K wieder geschlossen, so daß die Rundballenpresse R für einen neuen Wickelvorgang bereit ist.

## Patentansprüche

1. Rundballenpresse (R) mit einem eine verstellbare Auswurfklappe (K) aufweisenden Gehäuse (G) und einer Preßkammer (P), die zwischen einer kleinen Startkammer-Größe (S) und einer Maximalgröße (M) verstellbar ist, wobei die Preßkammer (P) wenigstens von ersten, zweiten und dritten, beweglichen Preßelement-Wandabschnitten (W1, W2, W3) und den Wandabschnitten zugeordneten Umlenkelementen (11, 14) für eine flexible Preßbahn oder für Preßriemen (B) begrenzt ist, **dadurch gekennzeichnet, daß** der dritte Wandabschnitt (W3) im Gehäuse (G) und das dem dritten Wandabschnitt (W3) zugeordneten Umlenkelement (14) in der Auswurfklappe (K) derart jeweils beweglich gelagert sind, daß das freie Ende des dritten Wandabschnitts (W3) und das Umlenkelement (14) während der Vergrößerung der Preßkammer (P) bis zur Maximalgröße (M) einander in etwa gleichbleibend benachbart sind und beim Öffnen der Auswurfklappe (K) für den Durchgang des Rundballens voneinander entfernt werden.

2. Rundballenpresse nach Anspruch 1, **dadurch gekennzeichnet, daß** der dritte, der Auswurfklappe (K) zugewandte, mit einem Ende im Gehäuse (G) schwenkbar gelagerte Wandabschnitt (W3) bei geschlossener Auswurfklappe (K) an der Preßbahn bzw. den Preßriemen (B) indirekt über einen das dem dritten Wandabschnitt (W3) zugeordnete Umlenkelement (14) haltenden und in der Auswurfklappe (K) beweglich, vorzugsweise verschwenkbar, angeordneten Stützteil (T) abstützbar ist.

3. Rundballenpresse nach Anspruch 2, **dadurch gekennzeichnet, daß** der Stützteil (T) bei einer Öffnungsbewegung der Auswurfklappe (K) vollständig vom dritten Wandabschnitt (W3) trennbar ist.

4. Rundballenpresse nach Anspruch 2, **dadurch gekennzeichnet, daß** der dritte Wandabschnitt (W3) im Gehäuse (G) frei schwenkbar und durch den Stützteil (T) entgegengesetzt zur Rundballen-Druckkraft beaufschlagt ist.

5. Rundballenpresse nach wenigstens einem der vorhergehenden Ansprüche, **dadurch gekennzeichnet, daß** der dritte Wandabschnitt (W3) mittels des Stützteils (T) aus einer der Maximalgröße (M) der Preßkammer (P) entsprechenden Maximalstellung II in eine die Startkammergröße (S) bestimmende Startstellung I verstellbar ist, vorzugsweise beim oder nach dem Schließen der Auswurfklappe (K).

6. Rundballenpresse nach wenigstens einem der vorhergehenden Ansprüche, **dadurch gekennzeichnet, daß** der Stützteil (T) wenigstens einen in der Auswurfklappe (K) schwenkbaren Arm (24) aufweist, der nahe seinem freien Ende als Umlenkelement (14) eine Umlenkwalze (22) trägt, daß im dritten Wandabschnitt (W3) Rahmenteile (19) vorgesehen sind, und daß am Arm (24) und zumindest einem Rahmenteil (19) quer zu den Schwenkrichtungen des Armes und des Rahmenteils zur Mitte der Preßkammer einander formschlüssig hintergreifende Anschlagmittel (26, 27) angeordnet sind.

7. Rundballenpresse nach wenigstens einem der vorhergehenden Ansprüche, **dadurch gekennzeichnet, daß** in der Auswurfklappe (K) wenigstens eine weitere Umlenkwalze (15) für die Preßbahn bzw. die Preßriemen (B) an einer Position angeordnet ist, die höher liegt als die Position der Umlenkwalze (22) am Stützteil (T) bei in der Startstellung I befindlichem dritten Wandabschnitt (W3).

8. Rundballenpresse nach Anspruch 6, **dadurch gekennzeichnet, daß** die Anschlagmittel (26, 27) zum Anheben des dritten Wandabschnittes bei der Schließbewegung der Auswurfklappe (K) wenigstens eine schräge Rampe aufweisen.

9. Rundballenpresse nach Anspruch 6, **dadurch gekennzeichnet, daß** der Arm (24) eine annähernd bogenförmig gekrümmte Form mit einem Zwischenabschnitt (25) hat, und daß der Zwischenabschnitt (25) an der der Preßkammer (P) abgewandten Seite des dritten Wandabschnittes (W3) positionierbar ist.

10. Rundballenpresse nach wenigstens einem der vorhergehenden Ansprüche, **dadurch gekennzeichnet, daß** im Gehäuse (G) und in der Startkammer eine Starterwalze (6) vorgesehen ist, daß der dritte Wandabschnitt (W3) in etwa koaxial zur Drehachse der Starterwalze (6) schwenkbar ist, und daß die Schwenkachse (23) des Stützteils (T) in der Auswurfklappe (K) bei geschlossener Auswurfklappe ebenfalls in etwa koaxial zur Drehachse (7) der Starterwalze (6) positionierbar ist.

11. Rundballenpresse nach wenigstens einem der vorhergehenden Ansprüche, **dadurch gekennzeichnet, daß** der dritte Wandabschnitte (W3) ein Rollgang (R2) mit mindestens einer, vorzugsweise mindestens drei, angetriebenen, im Rahmenteil (19) angeordneten Walzen (18) ist.

12. Rundballenpresse nach wenigstens einem der Ansprüche 1 bis 11, **dadurch gekennzeichnet, daß** der dritte Wandabschnitte (W3) nach Art eines angetriebenen Förderbandes im Rahmenteil (19) ausgebildet ist.

13. Rundballenpresse nach wenigstens einem der Ansprüche 11 oder 12, **dadurch gekennzeichnet, daß** die Walzen (18) des Rollgangs (R2) bzw. des Förderbandes über eine Antriebsverbindung mit der Starterwalze (6) gekoppelt sind.

14. Rundballenpresse nach wenigstens einem der vorhergehenden Ansprüche, **dadurch gekennzeichnet, daß** der dritte Wandabschnitt beim Öffnen der Auswurfklappe (K) über die Maximalstellung II hinaus nach unten in eine das Auswerfen oder Abrollen des Rundballens begünstigende Auswurfstellung verstellbar ist.

## Claims

1. Roll baler (R), having a housing (G), which includes a displaceable ejector flap (K), and a pressing chamber (P), which is displaceable between a small starting chamber magnitude (S) and a maximum magnitude (M), the pressing chamber (P) being defined at least by first, second and third deflecting elements (11, 14), associated with displaceable pressing element wall portions (W1, W2, W3) and the wall portions, for a flexible pressing path or for pressing belts (B), **characterised in that** the third wall portion (W3) in the housing (G) and the deflecting element (14), associated with the third wall portion (W3), in the ejector flap (K) are respectively displaceably mounted in such a manner that the free end of the third wall portion (W3) and the deflecting element (14) are substantially constantly adjacent each other during the enlargement of the pressing chamber (P) up to the maximum magnitude (M) and are moved apart during the opening of the ejector flap (K) to allow for the rolled bale to pass therethrough.

2. Roll baler according to claim 1, **characterised in that** the third wall portion (W3), which faces the ejector flap (K) and is pivotably mounted with one end in the housing (G), is supportable, when the ejector flap (K) is closed, on the pressing path or respectively on the pressing belts (B) indirectly via a supporting member (T), which retains the deflecting element (14), associated with the third wall portion (W3), and is disposed in the ejector flap (K) in a displaceable, preferably pivotable, manner.

3. Roll baler according to claim 2, **characterised in that** the supporting member (T) is totally separable from the third wall portion (W3) during an opening movement of the ejector flap (K).

4. Roll baler according to claim 2, **characterised in that** the third wall portion (W3) in the housing (G) is freely pivotable and is acted-upon by the supporting member (T) in opposition to the compressive force of the rolled bale.

5. Roll baler according to at least one of the preceding claims, **characterised in that** the third wall portion (W3) is displaceable, by means of the supporting member (T), from a maximum position II, which corresponds to the maximum magnitude (M) of the pressing chamber (P), into a starting position I, which determines the starting chamber magnitude (S), preferably during or subsequent to the closure of the ejector flap (K).

6. Roll baler according to at least one of the preceding claims, **characterised in that** the supporting member (T) has at least one arm (24), which is pivotable in the ejector flap (K) and carries a guide roller (22) as the deflecting element (14) close to its free end, **in that** frame members (19) are provided in the third wall portion (W3), and **in that** stop means (26, 27) are disposed on the arm (24) and on at least one frame member (19) transversely relative to the pivotal directions of the arm and of the frame member relative to the centre of the pressing chamber, which stop means engage behind one another in a form-locking manner.

7. Roll baler according to at least one of the preceding claims, **characterised in that** at least one additional guide roller (15) for the pressing path, or respectively for the pressing belts (B), is disposed in the ejector flap (K) at a position which lies higher than the position of the guide roller (22) on the supporting member (T) when the third wall portion (W3) is in the starting position I.

8. Roll baler according to claim 6, **characterised in that** the stop means (26, 27) have at least one inclined ramp for raising the third wall portion during the closing movement of the ejector flap (K).

9. Roll baler according to claim 6, **characterised in that** the arm (24) has an approximately arcuately curved configuration with an intermediate portion (25), and **in that** the intermediate portion (25) can be positioned on the side of the third wall portion (W3) remote from the pressing chamber (P).

10. Roll baler according to at least one of the preceding claims, **characterised in that** a starter roller (6) is provided in the housing (G) and in the starting chamber, **in that** the third wall portion (W3) is pivotable substantially coaxially relative to the axis of rotation of the starter roller (6), and **in that** the pivotal axis (23) of the supporting member (T) in the ejector flap (K) can also be positioned substantially coaxially relative to the axis of rotation (7) of the starter roller (6) when the ejector flap is closed.

11. Roll baler according to at least one of the preceding claims, **characterised in that** the third wall portion (W3) is a roller table (R2) having at least one, and preferably at least three, driven rollers (18) disposed in the frame member (19).

12. Roll baler according to at least one of claims 1 to 11, **characterised in that** the third wall portion (W3) is in the form of a driven conveyor belt in the frame member (19).

13. Roll baler according to at least one of claims 11 or 12, **characterised in that** the rollers (18) of the roller table (R2), or respectively of the conveyor belt, are connected to the starter roller (6) via a driving connection.

14. Roll baler according to at least one of the preceding claims, **characterised in that** the third wall portion is displaceable downwardly during the opening of the ejector flap (K) beyond the maximum position II into an ejecting position which promotes the ejection or rolling-away of the rolled bale.

## Revendications

1. Presse à balles rondes (R) avec un boîtier (G) présentant un volet d'éjection ajustable (K) et une chambre de compression (P) qui est ajustable entre une petite grandeur de chambre de démarrage (S) et une grandeur maximale (M), où la chambre de compression (P) est délimitée au moins par des premier, deuxième et troisième tronçons de paroi d'élément de compression (W1, W2, W3) mobiles et des éléments de renvoi (11, 14) associés aux tronçons de paroi pour une bande de compression flexible ou pour des courroies de compression (B), **caractérisée en ce que** sont logés respectivement d'une manière mobile le troisième tronçon de paroi (W3) dans le boîtier (G) et l'élément de renvoi (14) associé au troisième tronçon de paroi (W3) dans le volet d'éjection (K) de façon que l'extrémité libre du troisième tronçon de paroi (W3) et l'élément de renvoi (14), pendant l'agrandissement de la chambre de compression (P) jusqu'à la grandeur maximale (M), sont avoisinants à peu près d'une manière constante et sont éloignés l'un de l'autre lors de l'ouverture du volet d'éjection (K) pour le passage de la balle ronde.

2. Presse à balles rondes selon la revendication 1, **caractérisée en ce que** le troisième tronçon de paroi (W3) orienté vers le volet d'éjection (K), logé avec une extrémité d'une manière pivotante dans le boîtier (G), lorsque le volet d'éjection (K) est fermé, peut être supporté à la bande de compression respectivement aux courroies de compression (B) indirectement par une partie de support (T) maintenant l'élément de renvoi (14) associé au troisième tronçon de paroi (W3) et mobile dans le volet d'éjection (K), de préférence d'une manière pivotante.

3. Presse à balles rondes selon la revendication 2, **caractérisé en ce que** la partie de support (T) lors d'un mouvement d'ouverture du volet d'éjection (K), peut être séparée complètement du troisième tronçon de paroi (W3).

4. Presse à balles rondes selon la revendication 2, **caractérisée en ce que** le troisième tronçon de paroi (W3) peut pivoter librement dans le boitier (G) et est chargé par la partie de support (T) contrairement à la force de pression de la balle ronde.

5. Presse à balles rondes selon au moins l'une des revendications précédentes, **caractérisée en ce que** le troisième tronçon de paroi (W3) est déplaçable au moyen de la partie de support (T) d'une position maximale II correspondant à la grandeur maximale (M) de la chambre de pression (P) en une position de départ I définissant la grandeur de chambre de démarrage (S), de préférence au moment où après la fermeture du volet d'éjection (K).

6. Presse à balles rondes selon au moins l'une des revendications précédentes, **caractérisée en ce que** la partie de support (C) présente au moins un bras (24) apte à pivoter dans le volet d'éjection (K) qui porte à proximité de son extrémité libre, comme élément de renvoi (14), un rouleau de renvoi (22), **en ce que** dans le troisième tronçon de paroi (W3), des parties de cadre (19) sont prévues et **en ce que** sont disposés au bras (24) et au moins à une partie de cadre (19), transversalement aux directions de pivotement du bras et de la partie de cadre, des moyens de butée (26, 27) venant en prise arrière par concordance des formes vers le milieu de la chambre de compression.

7. Presse à balles rondes selon au moins l'une des revendications précédentes, **caractérisée en ce qu'**il est disposé dans le volet d'éjection (K) au moins un rouleau de renvoi supplémentaire (15) pour la bande de compression respectivement les courroies de compression (B) à une position qui est plus haute que la position du rouleau de renvoi (22) à la partie de support (T) lorsque le troisième tronçon de paroi (W3) se trouve dans la position de démarrage I.

8. Presse à balles rondes selon la revendication 6, **caractérisée en ce que** les moyens de butée (26, 27), pour relever le troisième tronçon de paroi, présentent lors du mouvement de fermeture du volet d'éjection (K) au moins une rampe oblique.

9. Presse à balles rondes selon la revendication 6, **caractérisée en ce que** le bras (24) a une forme courbée approximativement en forme d'arc avec un tronçon intermédiaire (25), et **en ce que** le tronçon intermédiaire (25) peut être positionné au côté du troisième tronçon de paroi (W3) éloigné de la chambre de compression (P).

10. Presse à balles rondes selon au moins l'une des revendications précédentes, **caractérisée en ce qu'**il est prévu dans le boîtier (G) et dans la chambre de démarrage un cylindre de démarrage (6), **en ce que** le troisième tronçon de paroi (W3) peut être pivoté à peu près coaxialement à l'axe de rotation du cylindre de démarrage (5) et **en ce que** l'axe de pivotement (23) de la partie de support (T) dans le volet d'éjection (K), lorsque le volet d'éjection est fermé, peut être positionné également à peu près coaxialement à l'axe de rotation (7) du cylindre de démarrage (6).

11. Presse à balles rondes selon au moins l'une des revendications précédentes, **caractérisée en ce que** le troisième tronçon de paroi (W3) est un train de rouleaux (R2) avec au moins un, de préférence au moins trois rouleaux menés (18) disposés dans la partie de cadre (19).

12. Presse à balles rondes selon au moins l'une des revendications 1 à 11, **caractérisée en ce que** le troisième tronçon de paroi (W3) est réalisé à la manière d'une bande de convoyage entraînée dans la partie de cadre (19).

13. Presse à balles rondes selon au moins l'une des revendications 11 ou 12, **caractérisée en ce que** les rouleaux (18) du train de rouleaux (R2) respectivement de la bande de convoyage sont couplés par une liaison d'entraînement au cylindre de démarrage (6).

14. Presse à balles rondes selon au moins l'une des revendications précédentes, **caractérisée en ce que** le troisième tronçon de paroi, lors de l'ouverture du volet d'éjection (K), est déplaçable au-delà de la position maximale II vers le bas dans une position d'éjection favorisant l'éjection ou le roulement de la balle ronde.
